Europäisches Patentamt

European Patent Office

Office européen des brevets

(11) Publication number: **0 005 336**
**B1**

# EUROPEAN PATENT SPECIFICATION

(45) Date of publication of patent specification: **12.05.82**

(51) Int. Cl.³: **B 65 G 25/02, B 08 B 13/00**

(21) Application number: **79300667.7**

(22) Date of filing: **20.04.79**

(54) Transfer device for use in a washing installation.

(30) Priority: **21.04.78 ES 469728**

(43) Date of publication of application:
**14.11.79 Bulletin 79/23**

(45) Publication of the grant of the patent:
**12.05.82 Bulletin 82/19**

(84) Designated Contracting States:
**BE CH DE FR GB IT LU NL SE**

(56) References cited:
**DE - B - 1 546 072**
**DE - B - 2 613 774**

(73) Proprietor: **INGENIERIA AGULLO, S.A.**
**Balmes, 191**
**Barcelona - 6 (ES)**

(72) Inventor: **Agullo, Miguel Negui**
**Balmes 191**
**Barcelona 6 (ES)**

(74) Representative: **Orr, William Maclean et al,**
**Haseltine Lake & Co Hazlitt House 28**
**Southampton Buildings Chancery Lane**
**London WC2A 1AT (GB)**

Courier Press, Leamington Spa, England.

## Transfer device for use in a washing installation

This invention relates to a washing installation comprising a washing apparatus and a walking beam conveyor for transferring an article to be washed to and from the washing apparatus, the conveyor comprising fixed bars on which the article can be supported and moveable bars which are moveable in a cyclic path of movement relative to the fixed bars in order to transfer the article from the fixed bars to the washing apparatus at which a washing operation is carried out, and to return the washed article to be supported again by the fixed bars.

It is known to provide a walking beam conveyor of the above type in a washing installation, in which the moveable bars carry out a series of four consecutive movements in order to transfer an article e.g. a machined part from the fixed bars of the washing apparatus, and then to return the washed part to the fixed bars, the series of movements comprising a vertically upward displacement, a forward horizontal displacement, a vertically downward displacement and a backward horizontal displacement.

The washing installation according to the invention is particularly suitable for washing axially extending machine parts of circular cross-section which have internal transversely extending lubricating ducts, such as the crankshaft of an internal combustion engine or a camshaft. However, it should be understood that the washing installation according to the invention is suitable for use in washing other types of machined parts, or indeed many other types of article which require to be washed.

Hitherto, a main difficulty in washing the internal ducts of machined parts satisfactorily is created by virtue of the fact that the ducts are usually long and narrow and have many branches, so that it is difficult to apply sufficient pressure and rate of flow of cleaning medium throughout the system of ducts. Conventionally, it is attempted to overcome this problem by providing monitoring devices which control the flow of cleaning medium, such as water, in different directions in accordance with pre-set programmes, this control involving the selective admission of cleaning medium through some holes and the closure of other of the holes to the duct system.

In practice, it is particularly difficult to provide the pre-set washing programme in high performance washing installations combined with a satisfactory walking beam conveyor for transferring the parts to and from the washing installations. In a known installation, it has been proposed to lower the washing apparatus under the control of separate drive parts of the transfer device. The washing apparatus is lowered until injectors of the cleaning medium touch the surface of the part to be washed. However, a separate washing apparatus, which may take the form of a washing box, has to be arranged at each washing station of the installation.

As each washing box has its own independent movement, a considerable number of pneumatic or hydraulic cylinders are employed in order to move the washing boxes, so that there is the disadvantage of a very complicated mechanical construction. Forced washing of the part is achieved by pressing-down of the washing boxes on the part.

It is also known to provide a walking beam conveyor having inner and outer conveyor bars, in which the inner bars move up and down, and the outer bars (which are not fixed) carry out horizontal traversing movement.

When the inner bars rise, they press the parts against the washing boxes. However, this known construction also suffers from the disadvantage of providing a mechanically complicated construction, in that all of the conveyor bars are moveable. Moreover, the loading and unloading cycles of the part to be washed at the end of the conveyor bars, becomes very complicated.

We are aware of the disclosure in German Patent Specification 2,613,774 which is concerned with the transfer of hot articles from an extrusion press to a cooling table by means of a moveable conveying beam. The conveying beam has its movement controlled by scanning the hot articles lying on it, the conveying beam carrying out, in one embodiment, a cycle of movement including a vertical upward path of movement, a horizontal path of movement, a further vertical upward path of movement, another horizontal path of movement, and a final vertical downward path of movement.

The present invention seeks to provide a washing installation which is of simpler construction than the known installation in that only some of its elements are mobile, and yet which are capable of cooperating satisfactorily with washing apparatus which is fixedly mounted in the installation.

According to the invention there is provided an article washing installation comprising a washing apparatus and a walking beam conveyor for transferring an article to be washed to and from the washing apparatus, the conveyor comprising fixed bars on which the article can be supported and moveable bars which are moveable in a cyclic path of movement relative to the fixed bars along vertical upward and downward paths and along horizontal forward and backward paths in order to transfer the article from the fixed bars to the washing apparatus at which a washing treatment is applied to the article, and to return the washed article to be supported again by the fixed bars, characterized in that the washing apparatus is immovably mounted in the installation, and the vertical movement of the moveable bars in one direction is split into two portions which are separated by one of said horizontal paths of movement.

Evidently, by arranging that either the vertically upward or the vertically downward movement of the conveyor bars is split into two portions separated by one of the horizontal paths of movement, premature contact between the article and the washing apparatus can be avoided during the horizontal movement of the article.

The invention will now be described in detail, by way of example only, with reference to the accompanying drawings in which:—

Figure 1 is a diagrammatic illustration of the movement of a conventional walking beam conveyor forming path of a washing installation;

Figure 2 is a perspective view of a known walking beam conveyor;

Figures 3 and 4 are schematic views, in front and side elevation respectively, of the conveyor of Figure 2;

Figures 5 to 16 are respective schematic views of different operating positions of a walking beam conveyor forming part of a washing installation according to the invention, in which the odd number figures are in front elevation and the even numbered figures are in side elevation; and

Figures 17 to 18 are diagrammatic illustrations of possible modes of movement of the conveyor shown in Figures 5 to 16.

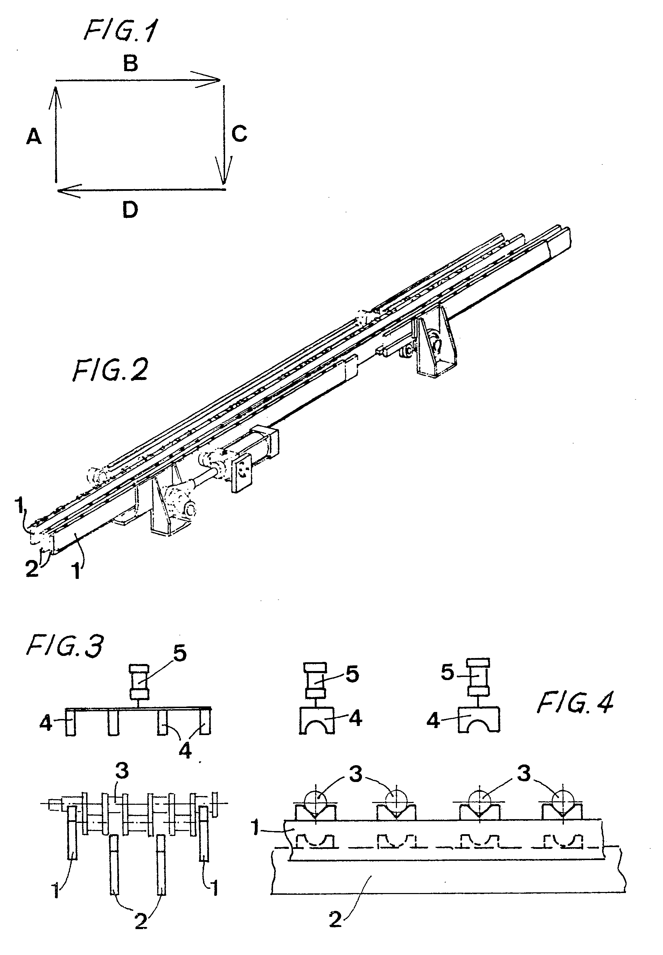

As shown in Figures 2 to 4, a conventional walking beam conveyor has two fixed bars 1 and two mobile bars 2, arranged under holders 4 of washing apparatus in the form of washing boxes 5. During an operating cycle, the two mobile bars 2 make a first upward vertical displacement movement A (Figure 1) in order to transfer parts 3 to be washed to the boxes 5, a second horizontal forward displacement movement B, a third downward vertical displacement C, and a fourth backward horizontal displacement movement D.

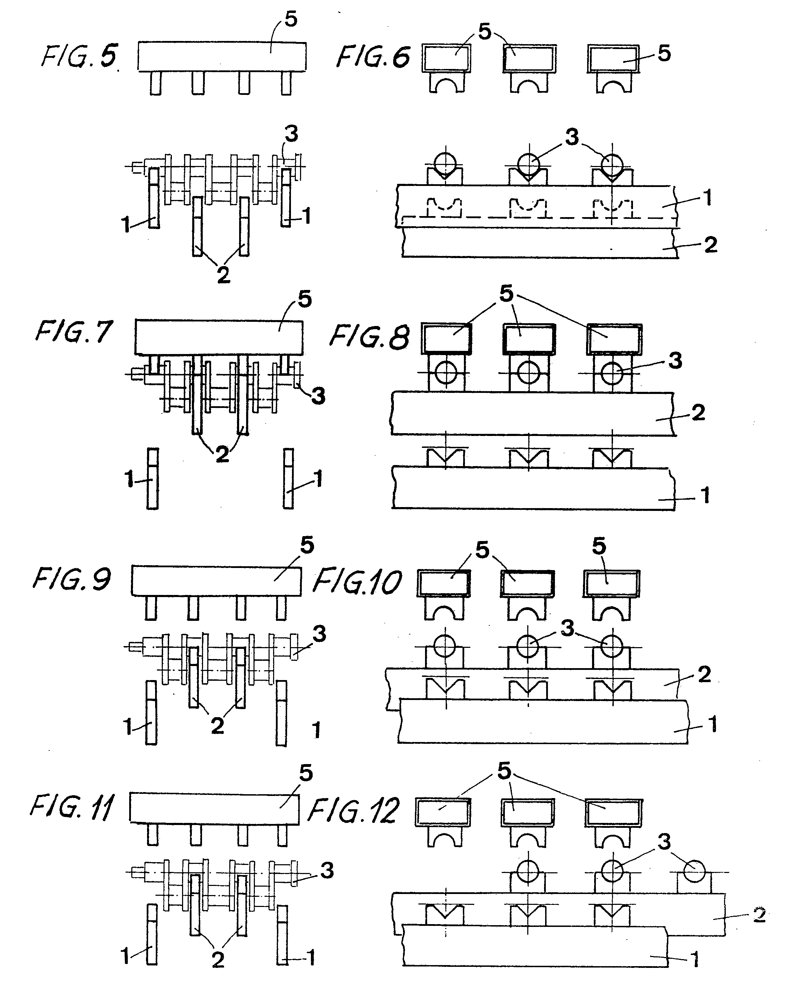

Referring now to Figures 5 to 16, and Figure 17, there is shown a walking beam conveyor having mobile bars 2 which are provided with an upward vertical displacement path of movement A, intended to put the parts 3 in contact with the respective washing boxes; with a second downward vertical path of movement C', which transfers the parts 3 (when washed) to an intermediate height position; with a third forward horizontal displacement path of movement B with the parts 3; with a fourth downward vertical displacement path of movement C", which enables the washed parts 3 to rest on the fixed bars 1; and with a fifth backward horizontal displacement path of movement D.

In Figures 5 and 6 it can be seen that the mobile conveyor bars 2 are in a low position and the part 3 rests on the fixed bars 1. The mobile bars 2 rise vertically until they reach the top end part and come into contact with the holders 4 of the washing boxes 5, in the position shown in Figures 7 and 8. The bars 2 remain immobile in this position while forced washing is performed of the ducts of the part 3, forcing water, compressed air or any other desired cleaning medium through the ducts. Once some time has passed, the mobile bars 2 move downwardly with the washed parts 3.

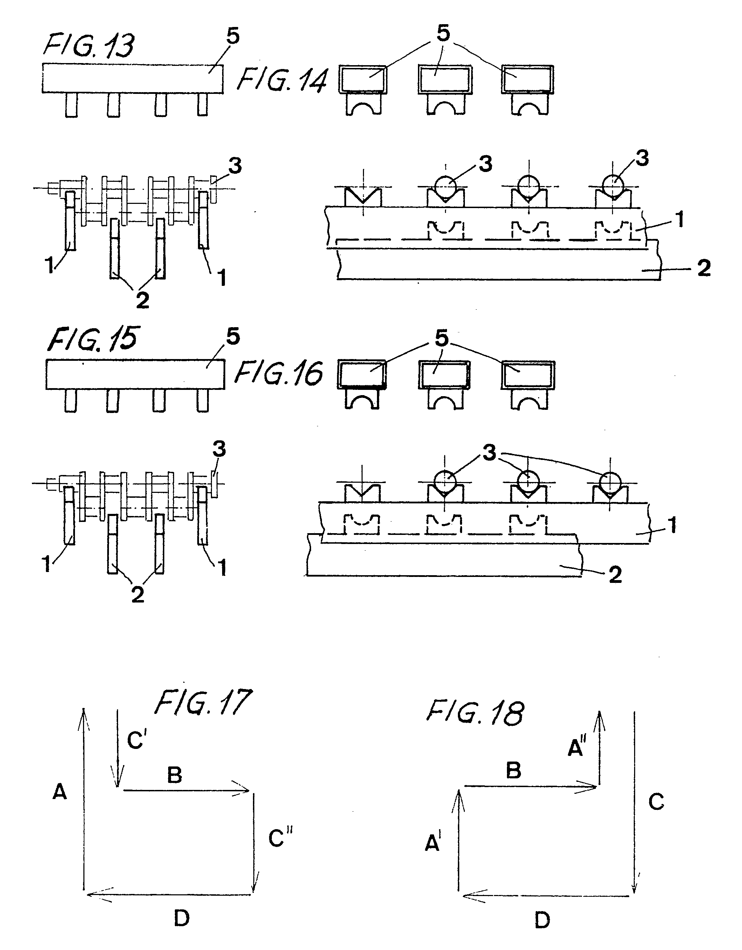

In Figures 9 to 10, there is shown an intermediate height position which is taken-up by the mobile bars 2 and the part 3 as they move downwardly from engagement with the washing boxes. This initial downward movement prepares the bars for being at the correct height, to enable the horizontal movement shown in Figures 11 and 12. This partial downward movement is necessary because, due to the shape of the washing boxes 4, 5 in contact with the parts 3, it is impossible to pass directly in a horizontal direction from the position of Figures 7 and 8 to the position of Figures 11 and 12.

This direct horizontal movement would be physically impossible, in that the parts 3 would collide with the sides of the washing boxes 4, 5 as the horizontal traverse movement started, shown in Figures 11 and 12.

Then following the partial downward movement along path C', and the horizontal movement along path B, the mobile bars move downwardly along path C" to their lowest position as shown in Figures 13 and 14, and the parts 3 are automatically placed during this downward movement on the fixed bars 1.

Finally, the mobile bars 2 return to their original position by moving horizontally along path D, as shown in Figures 15 and 16, through a backward movement in the opposite direction to that described in Figures 11 and 12.

In a modified embodiment the walking beam conveyor is arranged to have a cyclic path of movement as shown in Figure 18 in which the mobile bars 2 are provided with a first upward vertical displacement movement A', which takes the parts 3 to an intermediate height position, with a second forward horizontal displacement movement B; and a third vertical upward displacement movement A", which puts the parts 3 in contact with the respective washing boxes 5; with a fourth downward vertical displacement movement C, which allows the parts to rest on the fixed bars 1; and with a fifth backward horizontal displacement movement D. In this case, the movements would be those illustrated in Figures 5 to 16, but making the necessary changes in order to convert the dynamic diagram of Figure 17 into the dynamic diagram shown in Figure 18.

## Claims

1. An article washing installation comprising a washing apparatus (4, 5) and a walking beam conveyor (1, 2) for transferring an article (3) to be washed to and from the washing apparatus (4, 5), the conveyor comprising fixed bars (1) on which the article can be supported and moveable bars (2) which are moveable in a cyclic path of movement to the fixed bars along vertical upward and downward paths (A, C) and along horizontal forward and backward paths (B, D) in order to transfer the article from the fixed bars (1) to the washing apparatus (4, 5) at which a washing treatment is applied to the article, and to return the washed article to be supported again by the fixed bars (1), characterised in that the washing apparatus (4, 5) is immovably mounted in the installation, and the vertical movement of the moveable bars (2) in one direction is split into two portions (C', C'' or A', A'') which are separated by one of said horizontal paths of movement (B).

2. A washing installation according to claim 1, characterised in that the cyclic path of movement of the moveable bars (2) comprises:

(a) vertically upward movement along a continuous path (A) in order to transfer the article (3) from the fixed bars (1) to the washing apparatus (4, 5);

(b) partial vertically downward movement (C') in order to transfer the washed article (3) to an intermediate position clear of contact with the washing apparatus (4, 5);

(c) horizontally forward movement (B) from the intermediate position;

(d) further vertically downward movement (C'') to place the washed article (3) on the fixed bars (1); and

(e) horizontally backward movement (D) to the starting position of the moveable bars (2).

3. A washing installation according to claim 1, characterized in that the cyclic path of movement of the moveable bars (2) comprises:

(a) partial vertically upward movement (A') in order to raise the article from the fixed bars (1) to an intermediate position;

(b) horizontally forward movement (B) from the intermediate position to a position below the washing apparatus (4, 5);

(c) further vertically upward movement (A'') to transfer the article to be washed to the washing apparatus (4, 5);

(d) continuous vertically downward movement (C) in order to place the washed article on the fixed bars (1); and

(e) horizontally backward movement (D) to the starting position of the moveable bars (2).

4. A washing installation according to any one of the preceding claims, characterised in that the washing apparatus comprises a washing box (5) having a holder (4) shaped to receive an article to be washed.

**Patentansprüche**

1. Wascheinrichtung für Gegenstände mit einem Waschapparat (4, 5) und einem Schwenkbalkenförderer (1, 2) für die Überführung eines zu waschenden Gegenstandes (3) zum Waschapparat (4, 5) und von diesem weg, wobei der Förderer feste Stangen (1), auf die der Gegenstand aufgelegt werden kann, und bewegbare Stangen (2) enthält, die in einem in Bezug auf die festen Stangen zyklischen Bewegungsweg bewegbar sind, und zwar entlang vertikaler Aufwärts- und Abwärtswege (A, C) und entlang horizontaler Vorwärts- und Rückwärtswege (B, D), um den Gegenstand von den festen Stangen (1) zum Waschapparat (4, 5), in welchem der Gegenstand einer Waschbehandlung unterworfen wird, zu überführen und den gewaschenen Gegenstand wieder zurückzubringen, so daß er wieder auf den festen Stangen (1) aufliegt, dadurch gekennzeichnet, daß der Waschapparat (4, 5) in der Einrichtung unbeweglich angeordnet ist und daß die vertikale Bewegung der bewegbaren Stangen (2) in einer Richtung in zwei Teile (C', C'' oder A', A'') aufgeteilt ist, die durch einen der horizontalen Bewegungswege (B) getrennt sind.

2. Wascheinrichtung nach Anspruch 1, dadurch gekennzeichnet, daß der zyklische Bewegungsweg der bewegbaren Stangen (2) folgende Bewegungen umfaßt:

a) eine vertikale Aufwärtsbewegung entlang einem ununterbrochenen Weg (A), um den Gegenstand (3) von den festen Stangen (1) zum Waschapparat (4, 5) zu überführen;

b) eine teilweise vertikale Abwärtsbewegung (C'), um den gewaschenen Gegenstand (3) in eine Zwischenposition außer Kontakt mit dem Waschapparat (4, 5) zu überführen;

c) eine horizontale Vorwärtsbewegung (B) aus der Zwischenposition;

d) eine weitere vertikale Abwärtsbewegung (C''), um den gewaschenen Gegenstand (3) auf die festen Stangen (1) abzulegen;

e) eine horizontale Rückwärtsbewegung (D) in die Ausgangsposition der bewegbaren Stangen (2).

3. Waschanlage nach Anspruch 1, dadurch gekennzeichnet, daß der zyklische Bewegungsweg der bewegbaren Stangen (2) folgende Bewegungen umfaßt:

a) eine teilweise vertikale Aufwärtsbewegung (A'), um den Gegenstand von den festen Stangen in eine Zwischenposition anzuheben;

b) eine horizontale Vorwärtsbewegung (B) aus der Zwischenposition in eine Position unter dem Waschapparat (4, 5);

c) eine weitere vertikale Aufwärtsbewegung (A''), um den zu waschenden Gegenstand zum Waschapparat (4, 5) zu überführen;

d) eine ununterbrochene vertikale Abwärtsbewegung (C), um den gewaschenen Gegenstand auf die festen Stangen (1) abzulegen, und

e) eine horizontale Rückwärtsbewegung (D) in die Ausgangsposition der bewegbaren Stangen (2).

4. Wascheinrichtung nach einem der vorhergehenden Ansprüche, dadurch gekennzeichnet, daß der Waschapparat eine Waschbox (5) mit einem Halter (4) enthält, der so geformt ist, daß er einen zu waschenden Gegenstand aufnimmt.

### Revendications

1. Une installation de lavage d'objets comprenant un appareil de lavage (4, 5) et un convoyeur à poutres mobiles (1, 2) permettant de transférer un objet (3) à laver vers l'appareil de lavage (4, 5) et à partir de celui-ci, le convoyeur comprenant des barres fixes (1) sur lesquelles l'objet peut être supporté et des barres mobiles (2) qui sont déplaçables dans un trajet de mouvement cyclique par rapport aux barres fixes le long de trajets verticaux vers le haut et vers le bas (A, C) et le long de trajets horizontaux vers l'avant et vers l'arrière (B, D) de manière à transférer l'objet depuis les barres fixes (1) vers l'appareil de lavage (4, 5) au niveau duquel un traitement de lavage est appliqué à l'objet, et ramener l'objet lavé pour qu'il soit à nouveau supporté par les barres fixes (1), caractérisée en ce que l'appareil de lavage (4, 5) est monté de manière immobile dans l'installation, et en ce que le mouvement vertical des barres mobiles (2) dans une direction est divisé en deux parties (C', C" ou A', A") qui sont séparées par l'un desdits trajets de mouvement horizontaux (B).

2. Installation de lavage selon la revendication 1, caractérisée en ce que le trajet de mouvement cyclique des barres mobiles (2) comprend:

(a) un mouvement vertical vers le haut le long d'un trajet continu (A) de manière à transférer l'objet (3) depuis les barres fixes (1) jusqu'à l'appareil de lavage (4, 5);

(b) un mouvement vertical (C') partiel vers le bas de manière à transférer l'objet lavé (3) vers une position intermédiaire hors de contact avec l'appareil de lavage (4, 5);

(c) un mouvement horizontal vers l'avant (B) depuis la position intermédiaire;

(d) un autre mouvement vertical vers le bas (C") de manière à placer l'objet lavé (3) sur les barres fixes (1); et

(e) un mouvement horizontal vers l'arrière (D) jusqu'à la position de départ des barres mobiles (2).

3. Une installation de lavage selon la revendication 1, caractérisée en ce que trajet de mouvement cyclique des barres mobiles (2) comprend:

(a) un mouvement vertical partiel vers le haut (A') de manière à soulever l'objet des barres fixes (1) et l'amener à une position intermédiaire;

(b) un mouvement horizontal vers l'avant (B) à partir de la position intermédiaire vers une position en dessous de l'appareil de lavage (4, 5);

(c) un autre mouvement vertical vers le haut (A") pour transférer l'objet à laver vers l'appareil de lavage (4, 5);

(d) un mouvement continu vertical vers le bas (C) de manière à placer l'objet lavé sur les barres fixes (1); et

(e) un mouvement horizontal vers l'arrière (D) jusqu'à la position de départ des barres mobiles (2).

4. Une installation de lavage selon l'une des revendications précédentes, caractérisée en ce que l'appareil de lavage comprend une boîte de lavage (5) présentant un support (4) conformé pour recevoir un objet à laver.

*FIG.1*

B

A

C

D

*FIG.2*

1

2

1

*FIG.3*

5

4

4

4

5

4

5

4

*FIG.4*

3

1

3

3

1

2

2

FIG.5

FIG.6

FIG.7

FIG.8

FIG.9

FIG.10

FIG.11

FIG.12

FIG.13
FIG.14
FIG.15
FIG.16
FIG.17
FIG.18